(19) Europäisches Patentamt
European Patent Office
Office européen des brevets

(11) **EP 1 684 413 B1**

(12) **EUROPÄISCHE PATENTSCHRIFT**

(45) Veröffentlichungstag und Bekanntmachung des Hinweises auf die Patenterteilung:
**13.05.2009  Patentblatt 2009/20**

(51) Int Cl.:
*H02P 25/04* <sup>(2006.01)</sup>    *H02P 1/44* <sup>(2006.01)</sup>
*H02K 17/08* <sup>(2006.01)</sup>

(21) Anmeldenummer: **06000967.7**

(22) Anmeldetag: **18.01.2006**

(54) **Vorrichtung zur Steuerung eines Kondensatormotors und Lüftungsvorrichtung mit einer solchen Vorrichtung**

Arrangement for controlling a capacitor motor and ventilator with such an arrangement

Dispositif pour commander un moteur à condensateur et un ventilateur avec un tel  dispositif

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.01.2005  DE 102005004061**

(43) Veröffentlichungstag der Anmeldung:
**26.07.2006  Patentblatt 2006/30**

(73) Patentinhaber: **E.G.O. ELEKTRO-GERÄTEBAU GmbH**
**D-75038 Oberderdingen (DE)**

(72) Erfinder: **Kaizik, Sören**
**76703 Münzesheim (DE)**

(74) Vertreter: **Patentanwälte**
**Ruff, Wilhelm, Beier, Dauster & Partner**
**Kronenstrasse 30**
**70174 Stuttgart (DE)**

(56) Entgegenhaltungen:
**JP-A- 7 046 886**          **JP-A- 2004 056 843**
**US-B1- 6 246 207**

## Beschreibung

Die Erfindung betrifft eine Vorrichtung zur Steuerung eines Kondensatormotors sowie eine Lüftungsvorrichtung mit einer solchen Vorrichtung.

Bekannte Kondensatormotoren werden üblicherweise über eine Amplitudensteuerung drehzahlverstellt, wobei über den Motorschlupf s die Drehzahl n gesteuert wird. Bei einer kleineren Spannung wird auch das Moment kleiner und damit der Schlupf s größer. Die sich einstellende Drehzahl ergibt sich zu $n=(1-s)*n_0$. Dem Motor wird also eine sinusförmige Wechselspannung mit Netzfrequenz und frei einstellbarer Amplitude zur Verfügung gestellt.

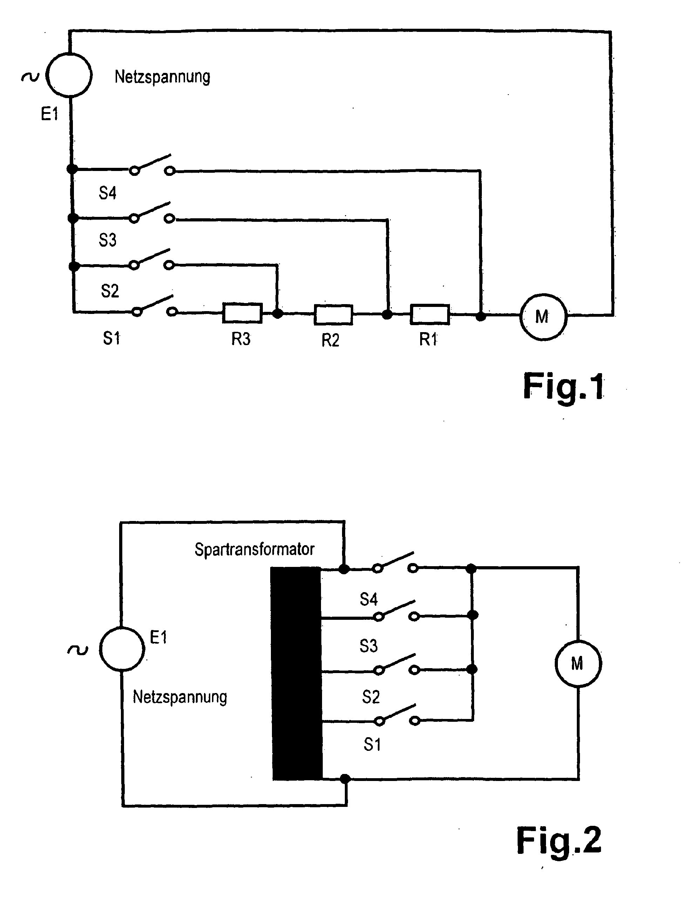

Im Stand der Technik werden im wesentlichen zwei Vorrichtungen bzw. Verfahren zur Steuerung von Kondensatormotoren eingesetzt. Fig. 1 zeigt eine herkömmliche Vorrichtung zur Leistungssteuerung über Vorschaltwiderstände R1 bis R3, welche über Schaltelemente S1 bis S4 zwischen den Kondensatormotor M und eine Spannungsversorgung E1 eingeschleift oder überbrückt werden können. Fig. 2 zeigt eine herkömmliche Vorrichtung zur Leistungssteuerung über Wicklungsanzapfung bei einem Spartransformator, welche über Schaltelemente S1 bis S4 ausgewählt werden können. Beide Lösungen zeichnen sich durch eine robuste und vielfach erprobte Technik aus und weisen wenige, störungsunanfällige Bauteile auf. Insbesondere die Spartransformatorlösung weist geringe Verluste und einen hohen Wirkungsgrad auf. Beide Lösungen ermöglichen jedoch nur eine stufenförmige Leistungsregelung. Ein Sanftanlauf mit einem kontinuierlichen Hochlauf ist nicht möglich. Zudem ergibt sich bei der Spartransformatorlösung ein hoher Verdrahtungsaufwand und ein hohes Gewicht und Volumen der elektronischen Schaltung. Bei der Vorwiderstandslösung ergeben sich im Teillastbetrieb hohe Verluste und ein geringer Wirkungsgrad.

Die JP 7046886 A zeigt eine Vorrichtung zur Steuerung eines Motors mit einer Gleichrichterschaltung. Zur Ansteuerung des Motors dient eine Pulsweitenmodulation. Vier Transistoren sind in Brückenschaltung nach Art einer H-Brücke mit zwei Brückenzweigen vorgesehen. Die Pulsweitenmodulation wird mit einer Nulldurchgangserkennung, bei der ein Vergleich mit einer Sägezahnfunktion erfolgt, betrieben.

## Aufgabe und Lösung

Die Aufgabe der Erfindung ist es, eine kostengünstige Vorrichtung zur Steuerung eines Kondensatormotors und eine damit versehene Lüftungsvorrichtung anzugeben, bei welcher das Bauvolumen und das Gewicht der elektronischen Schaltung und der Verdrahtungsaufwand deutlich reduziert sind.

Die Erfindung löst diese Aufgabe durch eine Vorrichtung zur Steuerung eines Kondensatormotors mit den Merkmalen des Anspruchs 1 sowie eine Lüftungsvorrichtung mit den Merkmalen des Anspruchs 2. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Erfindungsgemäß sind in einer Vorrichtung zur Steuerung eines Kondensatormotors zwei Tiefsetzstellerschaltungen vorgesehen, an welche jeweils die Ausgabespannung einer Gleichrichterschaltung angelegt wird. Für eine positive Ausgangshalbwelle wird eine erste Tiefstellerschaltung aktiviert, welche mittels einer Pulsweitenmodulation eine positive Amplitude einstellt. Für eine negative Ausgangshalbwelle wird eine zweite Tiefsetzstellerschaltung aktiviert, welche mittels einer Pulsweitenmodulation eine bezogen auf den Motor negative Amplitude einstellt. Der Kondensatormotor ist zwischen den beiden Tiefsetzstellerschaltungen angeordnet. Dadurch erzeugt die erfindungsgemäße Vorrichtung zum Steuern eines Kondensatormotors in vorteilhafter Weise aus einer Eingangswechselspannung eine Ausgangswechselspannung gleicher Frequenz, deren Amplitude kleiner oder gleich der Eingangsspannung ist.

Durch die verwendeten Tiefsetzsteiler wird die Eingangsspannung auf vorteilhafte Weise hochfrequent zerhackt und die Amplitude der Ausgabespannung wird über eine Pulsweitenmodulation oder über eine Pulspausensteuerung bzw. Pulspausenmodulation eingestellt. So lässt sich die Drehzahl und damit die Leistung des Kondensatormotors kontinuierlich einstellen. Die Amplitude der Ausgabespannung ergibt sich vorzugsweise aus dem einfachen linearen Zusammenhang:

$$U_{aus}=U_{ein}*t_{ein}/(t_{ein}+t_{aus}).$$

Durch die Erhöhung der Frequenz werden auf vorteilhafte Weise Bauvolumen und Gewicht eingespart. Beispielsweise ist ein 20kHz-Transformator bei gleicher Leistung wesentlich kleiner als ein 50Hz-Transformator.

Da eine einzelne Tiefsetzstellerschaltung nur bei sinusförmigen Spannungen verwendet werden kann, solange diese größer als Null sind, wird die Netzspannung gleichgerichtet und es werden zwei Tiefsetzstellerschaltungen verwendet, die als Vollbrückenschaltung angeordnet sind. Der Kondensatormotor ist zwischen den Halbbrückenzweigen angeordnet und erhält eine Wechselspannung. Die erste Tiefsetzstellerschaltung erzeugt über das Tastverhältnis eine einstellbare Sinusbetragsausgangsspannung für die positive Ausgabehalbwelle. Die zweite Tiefsetzstellerschaltung erzeugt über das Tastverhältnis eine einstellbare Sinusbetragsausgangsspannung für die negative Ausgabehalbwelle.

Bei der erfindungsgemäßen Vorrichtung ist eine Steuerschaltung vorhanden, welche Steuersignale für Schaltelemente in den Tiefsetzstellerschaltungen erzeugt. Diese werden beispielsweise zum Umschalten zwischen den Tiefsetzstellerschaltungen benutzt. So kann beispielsweise immer bei einem Spannungsnulldurchgang von der einen auf die andere Tiefsetzstellerschaltung umgeschaltet werden.

Bei der erfindungsgemäßen Vorrichtung ist eine Nulldurchgangserkennungsschaltung vorhanden, welche ein Nulldurchgangserkennungssignal B erzeugt. Dieses ist bei der positiven Ausgangshalbwelle auf einem hohen logischen Pegel und bei der negativen Halbwelle auf einem niedrigen logischen Pegel. Dieses netzsynchrone Nulldurchgangserkennungssignal B, welches seine Flanken im Nulldurchgang der Netzspannung hat, wird zum Umschalten zwischen den Tiefsetzstellerschaltungen verwendet.

Die Steuerschaltung kombiniert das Nulldurchgangserkennungssignal B mit einem Pulsweitenmodulationssignal A. Dieses wird der Steuerschaltung über eine galvanische Trennung zur Verfügung gestellt und stellt die Amplitude der Ausgabespannung des Tiefsetzstellers ein. Es erzeugt durch verschiedene Kombinationen der genannten Signale A, B die Steuersignale für die Schaltelemente der Tiefsetzstellerschaltungen.

Die Steuerschaltung erzeugt das Steuersignal für ein erstes Schaltelement durch die Signalverknüpfung ((/B und A) oder (B und /A)). Dabei bedeutet /B den Fall, dass die Netzhalbwelle negativ ist, also bedeutet der Schrägstrich die Negation des Signals.

Als Steuersignal für ein zweites Schaltelement gibt die Steuerschaltung das Nulldurchgangserkennungssignal B aus.

Die Steuerschaltung erzeugt das Steuersignal für ein drittes Schaltelement durch die Signalverknüpfung ((B und A) oder (/B und /A)).

Die Steuerschaltung invertiert das Nulldurchgangserkennungssignal B und gibt das invertierte Signal /B als Steuersignal für ein viertes Schaltelement aus.

Die vorbeschriebene Vorrichtung zur Steuerung eines Kondensatormotors wird in einer erfindungsgemäßen Lüftungsvorrichtung verwendet. Sie kann allgemein für andere drehzahlgeregelte Antriebseinheiten eingesetzt werden, vorteilhaft in einer Dunstabzugshaube oder einer sonstigen Antriebseinheit. Eine Dunstabzugshaube mit dieser Vorrichtung zur Motorsteuerung hat den Vorteil, dass neben der Möglichkeit einer kontinuierlichen Saugleistungsanpassung der Dunstabzugshaube auch Einbau- und Kostenvorteile erzielt werden können. Zudem kann durch die erfindungsgemäße Steuervorrichtung ein beliebiger Kondensatormotor der Leistungsklasse ohne Anpassung direkt angeschlossen werden. Zudem ist die Steuerung des Kondensatormotors lastunabhängig.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

**Kurzbeschreibung der Zeichnungen**

Vorteilhafte, nachfolgend beschriebene Ausführungsformen herkömmlicher Ausführungsbeispiele sowie der Erfindung sind in den Zeichnungen schematisch dargestellt. Es zeigt:

Fig. 1 ein schematisches Schaltbild einer herkömmlichen Vorrichtung zur Steuerung eines Motors über Vorschaltwiderstände,

Fig. 2 ein schematisches Schaltbild einer herkömmlichen Vorrichtung zur Steuerung eines Motors über einen Spartransformator mit Wicklungsanzapfungen,

Fig. 3 ein Prinzipschaltbild einer herkömmlichen Tiefsetzstellerschaltung.

Fig. 4 ein schematisches Blockdiagramm einer erfindungsgemäßen Vorrichtung zur Steuerung eines Kondensatormotors,

Fig. 5 ein schematisches Blockdiagramm einer Steuerschaltung für die Vorrichtung zur Steuerung eines Kondensatormotors aus Fig. 4 und

Fig. 6 ein schematisches Schaltbild einer Vollbrückenanordnung zweier Tiefsetzstellerschaltungen mit Umschaltung für die Vorrichtung aus Fig. 4.

**Detaillierte Beschreibung der Zeichnungen**

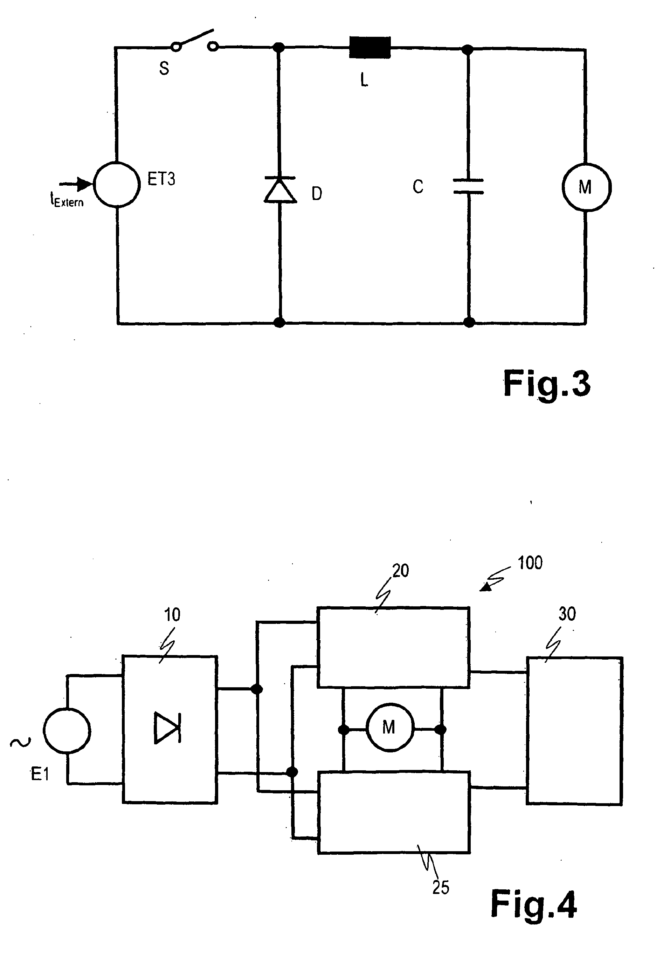

Fig. 4 zeigt ein schematisches Blockdiagramm einer erfindungsgemäßen Vorrichtung zur Steuerung eines Kondensatormotors. Wie aus Fig. 4 ersichtlich ist, umfasst die Vorrichtung 100 zur Steuerung eines Kondensatormotors M eine Gleichrichterschaltung 10 zum Gleichrichten einer Eingabespannung E1 und zum Ausgeben einer Ausgabespannung. Weiters umfasst sie zwei Tiefsetzstellerschaltungen 20, 25, an welche jeweils die Ausgabespannung der Gleichrichterschaltung 10 angelegt wird, und eine Steuerschaltung 30, welche Steuersignale für Schaltelemente erzeugt, welche in den Tiefsetzstellerschaltungen 20, 25 angeordnet sind. Die erfindungsgemäße Vorrichtung erzeugt aus einer Eingangswechselspannung E1 eine Ausgangswechselspannung gleicher Frequenz, deren Amplitude kleiner oder gleich der Eingangsspannung E1 ist. Dies wird dadurch erreicht, dass die Eingangsspannung E1 gleichgerichtet wird. Diese Spannung dient den beiden Tiefsetzstellerschaltungen 20, 25 als Eingangsspannung. Für eine positive Ausgangshalbwelle wird eine erste Tiefsetzstellerschaltung 20 aktiviert, welche mittels einer Pulsweitenmodulation eine positive Amplitude einstellt. Für eine negative Ausgangshalbwelle wird eine zweite Tiefsetzstellerschaltung 25 aktiviert, welche mittels einer Pulsweitenmodulation eine negative Amplitude einstellt. Der Kondensatormotor M ist zwischen den beiden Tiefsetzstellerschaltungen 20, 25 angeordnet und erhält so eine Wechselspannung.

Fig. 3 zeigt ein Prinzipschaltbild einer Tiefsetzstellerschaltung, welche auch bei einer sinusförmigen Spannung funktioniert, solange diese größer Null ist. Dies ist aber nur für eine Halbwelle der Eingabespannung E1, z.B. der Netzspannung, der Fall. Die negative Halbwelle würde über eine Diode D und einen Schaltkontakt S zu einem Kurzschluss führen. Daher wird die Eingabespannung E1 gleichgerichtet, wodurch an der Tiefsetzstellerschaltung eine Sinusbetragsspannung anliegt. Die Tiefsetzstellerschaltung erzeugt über das Tastverhältnis eine einstellbare Sinusbetragsausgangsspannung, wobei dem Motor jedoch nur eine gleichgerichtete Sinusspannung zur Verfügung steht. Bei der erfindungsgemäßen Vorrichtung aus Fig. 4 wird daher für die negative Halbwelle eine weitere Tiefsetzstellerschaltung verwendet.

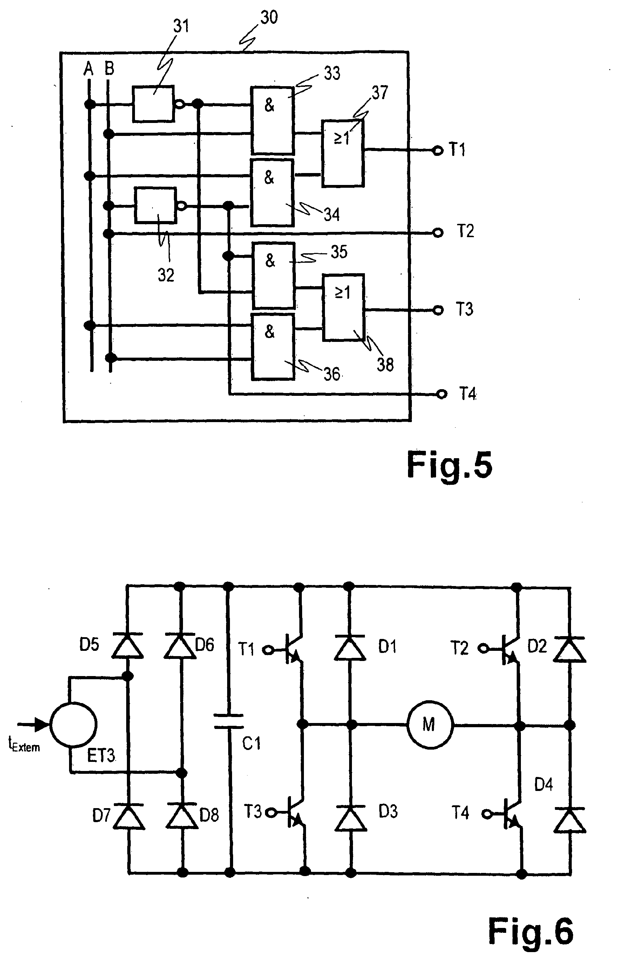

Fig. 5 zeigt ein schematisches Blockdiagramm der Steuerschaltung 30 für die Vorrichtung 100 zur Steuerung eines Kondensatormotors M aus Fig. 4. Wie aus Fig. 5 ersichtlich ist, erzeugt die Steuerschaltung 30 die Steuersignale für die Schaltelemente T1, T2, T3, T4 durch logische Verknüpfungsmittel. Diese umfassen zwei Inverter 31, 32, vier UND-Verknüpfungen 33 bis 36 und zwei ODER-Verknüpfungen 37, 38.

Fig. 6 zeigt ein schematisches Schaltbild der Vollbrückenanordnung der beiden Tiefsetzstellerschaltungen 20, 25 mit Umschaltung für die Vorrichtung 100 zur Steuerung des Kondensatormotors M aus Fig. 4. Wie aus Fig. 6 ersichtlich ist, sind zur Ansteuerung von vier Schaltelementen T1, T2, T3 und T4 der Vollbrückenanordnung der beiden Tiefsetzstellerschaltungen 20, 25 vier Steuersignale erforderlich. Die Sollwertvorgabe erfolgt beispielsweise über einen Microcontroller. Dieser stellt ein Pulsweitenmodulationssignal A zur Verfügung, mit dem sich die Amplitude der Ausgabespannung der Tiefsetzstellerschaltungen 20, 25 einstellen lässt. Dieses Pulsweitenmodulationssignal A wird vom Microcontroller galvanisch getrennt zur Verfügung gestellt, da der Microcontroller aus Sicherheitsgründen die SELF-Anforderung erfüllen muss. Werden nun alle vier Ansteuersignale für die vier Schaltelemente T1, T2, T3 und T4 der Vollbrückenanordnung vom Microcontroller erzeugt, dann ist für jedes Steuersignal eine galvanische Trennung erforderlich. Diese wird beispielsweise durch entsprechende optische Koppler umgesetzt. Da diese Lösung recht teuer ist, wird vorteilhaft zur Erzeugung der vier Steuersignale für die vier Schaltelemente T1, T2, T3 und T4 der Vollbrückenanordnung das Pulsweitenmodulationssignal A mit einem Nulldurchgangserkennungssignal B verknüpft. So ist nur für das Pulsweitenmodulationssignal A eine galvanische Trennung erforderlich.

Das Nulldurchgangserkennungssignal B, welches seine Flanken im Nulldurchgang der Eingabespannung E1 hat, wird von einer nicht dargestellten Nulldurchgangserkennungsschaltung erzeugt. Das Nulldurchgangserkennungssignal B weist bei der positiven Ausgangshalbwelle einen hohen logischen Pegel auf und bei der negativen Halbwelle einen niedrigen logischen Pegel.

Wie aus Fig. 5 ersichtlich ist, erzeugt die Steuerschaltung 30 die Steuersignale für die vier Schaltelemente T1, T2, T3 und T4 der Vollbrückenanordnung mit entsprechenden logischen Verknüpfungsmitteln 31 bis 38. Diese führen die erforderlichen Verknüpfungsfunktionen des Nulldurchgangserkennungssignals B und des Pulsweitenmodulationssignals A aus. Das Steuersignal für ein erstes Schaltelement T1 wird durch die Signalverknüpfung ((/B und A) oder (B und /A)) erzeugt. Es entspricht bei der negativen Eingabespannungshalbwelle dem hochfrequenten vom Microcontroller erzeugten Pulsweitenmodulationssignal A und bei der positiven Eingabespannungshalbwelle dem komplementären Pulsweitenmodulationssignal A oder dem Wert 0. Als Steuersignal für ein zweites Schaltelement T2 wird das Nulldurchgangserkennungssignal B ausgegeben. So ist bei der positiver Eingabespannungshalbwelle das zweite Schaltelement T2 durchgeschaltet.

Das Steuersignal für ein drittes Schaltelement T3 wird durch die Signalverknüpfung ((B und A) oder (/B und /A)) erzeugt. Es entspricht bei der positiven Eingabespannungshalbwelle dem hochfrequenten vom Microcontroller erzeugten Pulsweitenmodulationssignal A und bei der negativen Eingabespannungshalbwelle dem komplementären Pulsweitenmodulationssignal A oder dem Wert 0. Als Steuersignal für ein viertes Schaltelement T4 wird ein invertiertes Signal /B des Nulldurchgangserkennungssignals B ausgegeben. So schaltet bei der negativen Eingabespannungshalbwelle das vierte Schaltelement T4 durch.

Durch die Steuerschaltung 30 kann auf vorteilhafte Weise mit nur einem vom Microcontroller erzeugten hochfrequenten Pulsweitenmodulationssignal A und dem Nulldurchgangserkennungssignal B eine sehr komplexe Ansteuerung zweier Tiefsetzstellerschaltungen 20, 25 mit Umschaltung in Vollbrückenanordnung realisiert werden. Es ist nur eine Schnittstelle zwischen Microcontrollereinheit und der Leistungseinheit erforderlich.

**Patentansprüche**

1. Vorrichtung zur Steuerung eines Kondensatormotors (M) mit einer Gleichrichterschaltung (10) zum Gleichrichten einer Eingabespannung und zum Ausgeben einer Ausgabespannung und mit zwei Tiefsetzstellerschaltungen (20, 25), an welche jeweils die Ausgabespannung der Gleichrichterschaltung (10) anlegbar ist, sowie mit einer Steuerschaltung (30) zur Erzeugung der Steuersignale für Schaltelemente (T1, T2, T3, T4) in den Tiefsetzstellerschaltungen (20, 25), wobei für eine positive Ausgangshalbwelle mit der Form einer gleichgerichteten Sinusspannung eine erste Tiefsetzstellerschaltung (20) aktivierbar ist, welche mittels einer Pulsweitenmodulation oder Pulspausenmodulation eine positive Amplitu-de einstellt, wobei für eine negative Ausgangshalbwelle mit der Form einer gleichgerichteten Sinusspannung eine zweite Tiefsetzstellerschaltung (25) aktivierbar ist, welche mittels einer Pulsweitenmodulation oder Pulspausenmodulation eine negative Amplitude einstellt, wobei der Kondensatormotor (M) zwischen den beiden Tiefsetzstellerschaltungen (20, 25) angeordnet ist, **gekennzeichnet durch** eine Nulldurchgangserkennungsschaltung zur Erzeugung eines Nulldurchgangserkennungssignals (B), welches bei positiver Ausgangshalbwelle auf einem hohen logischen Pegel ist und bei negativer Halbwelle auf einem niedrigen logischen Pegel ist, wobei die Steuerschaltung (30) die Steuersignale als Pulsweitenmodulation **durch** Kombinieren des Nulldurchgangserkennungssignals (B) und eines Pulsweitenmodulationssignals (A) oder Pulspausenmodulationssignals erzeugt, welches der Steuerschaltung (30) über eine galvanische Trennung zur Verfügung steht und welches die Amplitude der Ausgabespannung der Tiefsetzstellerschaltungen (20, 25) einstellt und wobei die Steuerschaltung (30) das Steuersignal für ein erstes Schaltelement (T1) **durch** die Signalverknüpfung ((/B und A) oder (B und /A)) erzeugt und das Nulldurchgangserkennungssignal (B) als Steuersignal für ein zweites Schaltelement (T2) ausgibt, wobei die Steuerschaltung (30) das Steuersignal für ein drittes Schaltelement (T3) **durch** die Signalverknüpfung ((B und A) oder (/B und /A)) erzeugt und das Nulldurchgangserkennungssignal (B) invertiert und das invertierte Signal (/B) als Steuersignal für ein viertes Schaltelement (T1) ausgibt.

2. Lüftungsvorrichtung, insbesondere Dunstabzugshaube, mit einem Kondensatormotor (M), **dadurch gekennzeichnet, dass** sie eine Vorrichtung (100) nach Anspruch 1 aufweist zur Steuerung des Kondensatormotors (M).

## Claims

1. Device for control of a capacitor motor (M) having a rectifier circuit (10) for rectification of an input voltage and for output of an output voltage and having two step-down converter circuits (20, 25) to each of which the output voltage of the rectifier circuit (10) can be applied, and having a control circuit (30) for generation of the control signals for switching elements (T1, T2, T3, T4) in the step-down converter circuits (20, 25), where for a positive output half-wave with the form of a rectified sinusoidal voltage a first step-down converter circuit (20) can be activated which sets a positive amplitude by means of pulse width modulation or pulse position modulation, where for a negative output half-wave with the form of a rectified sinusoidal voltage a second step-down converter circuit (25) can be activated which sets a negative amplitude by means of pulse width modulation or pulse position modulation, where the capacitor motor (M) is arranged between the two step-down converter circuits (20, 25), **characterized by** a zero passage detection circuit to generate a zero passage detection signal (B) which is at a high logic level with a positive output half-wave and at a low logic level with a negative half-wave, where the control circuit (30) generates the control signals as pulse width modulation by combining the zero passage detection signal (B) and a pulse width modulation signal (A) or a pulse position modulation signal which is made available to the control circuit (30) via a galvanic isolation and which sets the amplitude of the output voltage of the step-down converter circuits (20, 25) and where the control circuit (30) generates the control signal for a first switching element (T1) by the signal combination ((/B and A) and (B and /A) and emits the zero passage detection signal (B) as a control signal for a second switching element (T2), where the control circuit (30) generates the control signal for a third switching element (T3) by the signal combination ((B and A) or (/B and /A)), inverts the zero passage detection signal (B) and emits the inverted signal (/B) as a control signal for a fourth switching element (T1).

2. Ventilation device, in particular an extractor hood, having a capacitor motor (M), wherein it has a device (100) according to Claim 1 for control of the capacitor motor (M).

## Revendications

1. Dispositif de commande d'un moteur à condensateur (M) avec un circuit redresseur (10) pour rectifier une tension d'entrée et pour produire une tension de sortie, et avec deux circuits convertisseurs Buck (20, 25) auxquels on peut appliquer respectivement la tension de sortie du circuit redresseur (10), ansi qu'avec un circuit de commande (30) pour la génération des signaux de commande pour les éléments de commutation (T1, T2, T3, T4) dans les circuits convertisseurs Buck (20, 25), sachant que pour une demi-onde d'entrée positive présentant la forme d'une tension sinusoïdale rectifiée on peut activer un premier circuit convertisseur Buck (20), qui règle une amplitude positive par une modulation de largeur d'impulsions ou par une modulation de pause d'impulsions (*Pulspausenmodulation*), sachant que pour une demi-onde d'entrée négative présentant la forme d'une tension sinusoïdale rectifiée on peut activer un deuxième circuit convertisseur Buck (25), qui règle une amplitude négative par une modulation de largeur d'impulsions ou par une modulation de pause d'impulsions (*Pulspausenmodulation*), sachant que le moteur à condensateur (M) est disposé entre les deux circuits convertisseurs Buck (20, 25), **caractérisé par** un circuit détecteur de passage par zéro pour la génération d'un signal de détection de passage par zéro (B), qui présente un niveau logique élevé au cas d'une demi-onde positive et un niveau logique faible au cas d'une demi-onde négative, sachant que le circuit de commande (30) produit les signaux de commande par modulation de largeur d'impulsions en combinant le signal de détection de passage par zéro (B) à un signal de modulation de largeur d'impulsions (A) ou de modulation de pause d'impulsions, qui est à disposition du circuit de commande (30) en passant par une isolation électrique et qui règle l'amplitude de la tension de sortie des circuits convertisseurs Buck (20, 25), et sachant que le circuit de commande (30) génère le signal de commande pour un premier élément de commutation (T1) par la combinaison des signaux ((/B et A) ou (B et /A)) et qu'il émet le signal de détection de passage par zéro (B) en tant que signal de commande pour un deuxième élément de commutation (T2), sachant que le circuit de commande (30) produit le signal de commande pour un troisième élément de commutation (T3) par une combinaison des signaux ((B et A) ou (/B et /A)) et qu'il inverse le signal de détection de passage par zéro (B) et qu'il émet le signal inversé (/B) en tant que signal de commande pour un quatrième élément de commande (T1).

2. Dispositif de aération, notamment hotte aspirante, avec un moteur à condensateur (M), **caractérisé en ce qu'**il présente un dispositif (100) d'après la revendication 1 pour la commande du moteur à condensateur (M).

**Fig.1**

**Fig.2**

**Fig.3**

**Fig.4**

**Fig.5**

**Fig.6**

**EP 1 684 413 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 7046886 A